# EUROPEAN PATENT SPECIFICATION

(11) **EP 2 975 753 B1**
(45) Date of publication and mention of the grant of the patent: **17.11.2021**
(21) Application number: 14176844.0
(22) Date of filing: 14.07.2014
(51) Int. Cl.: H02M 7/487, H02M 7/483, H02M 3/335

(54) **A three-level converter**
Dreistufiger Umrichter
Convertisseur à trois niveaux

(43) Date of publication of application: 20.01.2016
(73) Proprietor: ABB Schweiz AG, 5400 Baden (CH)
(72) Inventor: Park, Ki-Bum, 5405 Baden-Dättwil (CH); Canales, Francisco, 5405 Baden-Dättwil (CH); Pettersson, Sami, 5405 Baden-Dättwil (CH)
(74) Representative: Kolster Oy Ab

(56) References cited:
- CN-A- 1 988 346
- CN-A- 101 588 126
- US-A- 5 619 403
- US-A1- 2006 050 537
- US-B1- 6 349 044
- US-B1- 7 271 505
- JEON S J ET AL: "A primary-side-assisted zero-voltage and zero-current switching three-level DC-DC converter with phase-shift control", APEC 2002. 17TH. ANNUAL IEEE APPLIED POWER ELECTRONICS CONFERENCE AND EXPOSITION. DALLAS, TX, MARCH 10 - 14, 2002; [ANNUAL APPLIED POWER ELECTRONICS CONFERENCE], NEW YORK, NY : IEEE, US, vol. 2, 10 March 2002 (2002-03-10), pages 641-647, XP010582987, DOI: 10.1109/APEC.2002.989313 ISBN: 978-0-7803-7404-1
- CHEN ZHAO ET AL: "The Analysis of the Charge Unbalance in Flying Capacitors of a Novel Three-level ZVS Converter", POWER ELECTRONICS AND DRIVES SYSTEMS, 2005. PEDS 2005. INTERNATIONAL C ONFERENCE ON KUALA LUMPUR, MALAYSIA 28-01 NOV. 2005, PISCATAWAY, NJ, USA,IEEE, vol. 2, 28 November 2005 (2005-11-28), pages 882-885, XP010910458, DOI: 10.1109/PEDS.2005.1619812 ISBN: 978-0-7803-9296-0
- SANG-HO CHO ET AL: "High-Efficiency and Low-Cost Tightly Regulated Dual-Output $LLC$ Resonant Converter", IEEE TRANSACTIONS ON INDUSTRIAL ELECTRONICS, IEEE SERVICE CENTER, PISCATAWAY, NJ, USA, vol. 59, no. 7, 1 July 2012 (2012-07-01), pages 2982-2991, XP011417633, ISSN: 0278-0046, DOI: 10.1109/TIE.2011.2170391
- WUHUA LI ET AL: "Three-Level Forward Flyback Phase-Shift ZVS Converter With Integrated Series-Connected Coupled Inductors", IEEE TRANSACTIONS ON POWER ELECTRONICS, INSTITUTE OF ELECTRICAL AND ELECTRONICS ENGINEERS, USA, vol. 27, no. 6, 1 June 2012 (2012-06-01), pages 2846-2856, XP011436328, ISSN: 0885-8993, DOI: 10.1109/TPEL.2011.2177478
- PINHEIRO J R ET AL: "Wide load range three-level ZVS-PWM DC-to-DC converter", PROCEEDINGS OF THE ANNUAL POWER ELECTRONICS SPECIALISTS CONFERENCE. (PESC). SEATTLE, JUNE 20 - 25, 1993; [PROCEEDINGS OF THE ANNUAL POWER ELECTRONICS SPECIALISTS CONFERENCE. (PESC)], NEW YORK, IEEE, US, vol. CONF. 24, 20 June 1993 (1993-06-20), pages 171-177, XP010149040, DOI: 10.1109/PESC.1993.471920 ISBN: 978-0-7803-1243-2

## Description

### FIELD OF THE INVENTION

The present invention relates to the field of conversion of electrical power between DC power input and DC power output, and more particularly to a DC/DC converter for high input voltage applications.

### BACKGROUND OF THE INVENTION

DC-DC power converters are nowadays used for many modern day applications. For example, DC-DC power converters are widely used for high voltage, high power applications such as used in electrical power distribution networks, in telecommunications, battery chargers, and uninterruptible power supplies with power factor correction i.e. harmonics reduction.

A regular three-phase rectifier can be used in a power factor correction stage due to simplicity, efficiency, reliability, and low cost. However, in order to reduce the harmonic distortion in this converter, its input to output voltage characteristic has to be increased. Therefore, the DC/DC step down second stage converter usually has to support substantial voltage stresses, and the need for high voltage devices is required. Unfortunately, these high voltage devices present a poor behavior in terms of conduction and switching losses, and also have a higher cost.

Various kinds of techniques overcoming this problem to obtain multi-outputs have been developed. Solutions for this issue have been largely reported in the literature [1]-[2]. The so-called Zero Voltage Switching Three-Level dc/dc converters reduce the voltage stress across the power switch to half of the input voltage. Hence, power devices with better characteristics can be used. Also, these converters achieve zero voltage switching for the primary switch that is a necessary characteristic in order to increase the efficiency in the converter.

A proper technique can be selected according to efficiency, cost, and regulation range. In applications where the output voltage regulation range is not too wide, a post-regulator based on a transformer multi-winding is widely used. When it comes to tight output voltage regulation, an additional DC-DC converter may be considered.

In the following, the prior art will be described with reference to the accompanying drawings of Figures 1 to 9, of which:
Figure 1 shows a high input voltage three-level converter according to the prior art;
Figure 2 shows key waveforms of a high input voltage three-level converter according to the prior art;
Figure 3 shows an alternative structure for a high input voltage three-level converter according to the prior art;
Figure 4 shows another alternative structure for a high input voltage three-level converter according to the prior art;
Figure 5 shows a third alternative high input voltage three-level converter according to the prior art;
Figure 6 presents a fourth alternative high input voltage three-level converter according to the prior art;
Figure 7 shows key waveforms of a fourth alternative high input voltage three-level converter according to the prior art;
Figure 8 shows the first simulation waveforms of a fourth alternative high input voltage three-level converter according to the prior art; and
Figure 9 shows the second simulation waveforms of a fourth alternative high input voltage three-level converter according to the prior art.

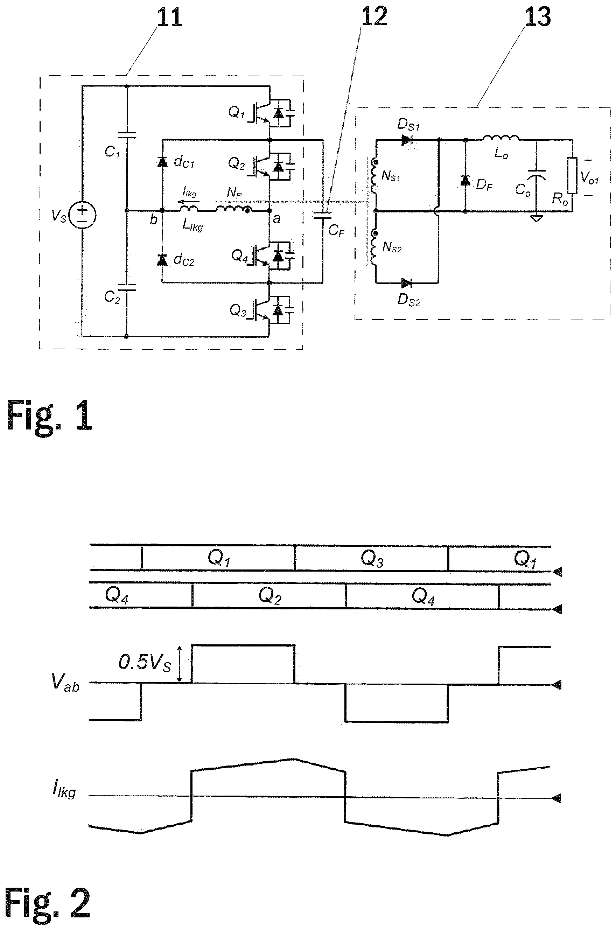

Figure 1 presents a high input voltage three-level converter according to the prior art. The high input voltage three-level converter according to the prior art has a flying capacitor C_{F} 12 between the primary side 11 and the secondary side 13. The high input voltage three-level converter according to the prior art utilizes an NPC inverter (NPC, Neutral Point Clamped) with a neutral point dividing the DC-link into two halves.

The presented high input voltage three-level converter, which utilizes an NPC inverter with a flying capacitor at the same time, is a very promising topology. Solutions for this topology have been largely reported in the literature [3]-[5]. The voltages of C_{F} 12 and input capacitors C₁ and C₂ are half of the input voltage, Vs/2. Therefore, the voltage stresses on all the switches are ensured to be Vs/2. Moreover, a phase-shift modulation enables ZVS for all switches (ZVS, Zero Voltage Switching). Other prior art converter solutions employing Zero Voltage Switching have also been reported in the literature [6]-[7].

Another prior art solution reported in the literature [8] discloses a prior art wide load characteristic Zero Voltage and Zero Current Switching three-level DC-DC converter, in which said three-level converter comprises a flying capacitor C_{F} used as an energy source for feeding an auxiliary circuit.

Another prior art solution reported in the literature [9] discloses a prior art Primary Side Assisted Zero Voltage and Zero Current Switching three-level DC-DC converter with Phase Shift Control, in which said DC-DC converter uses only one auxiliary transformer and two diodes to achieve Zero Current Switching for the inner leg.

Another prior art solution reported in the literature [10] discloses a prior art input stage circuit of a three-level DC-DC converter, in which input stage circuit uses Metal-Oxide-Semiconductor Field Effect Transistors to discharge a flying capacitor to maintain the voltage across the flying capacitor at a half of the input voltage.

Another prior art solution reported in the literature [11] discloses a prior art three-level Zero Voltage Switching converter, in which said three-level Zero Voltage Switching converter has a half-bridge structure having two flying capacitors connected to the midpoint of primary transformer windings and two coupled inductors to achieve Zero Current Switching.

A prior art US Patent Application document US 2006/0050537 A1 discloses a prior art solution for an input stage of a three-level DC/DC converter.

A prior art publication of Sang-Ho Cho et al., "High-Efficiency and Low-Cost Tightly Regulated Dual-Output LLC Resonant Converter, July 2012, IEEE Transactions on Industrial Electronics, ISSN 0278-0046; pages 2982-2991", discloses a prior art solution for a dual-output LLC resonant converter.

Document CN1988346 is also prior art to the present application.

Regarding multi-output applications with a three-level converter, conventional multi-output structures may also be applied to the three-level converter. However with present prior art converters, it is not been possible to achieve a suitable solution for the primary side auxiliary output that would efficiently provide both a wide regulation range and a simple structure at the same time.

Figure 2 presents key waveforms of a high input voltage three-level converter according to the prior art. The main output voltage Vₒ₁ of the three-level converter is regulated by the phase-shift modulation, as can be seen in Figure 2. There are also other types of prior art multi-output structures that may be considered suitable for the regulation of the auxiliary output voltage Vo2.

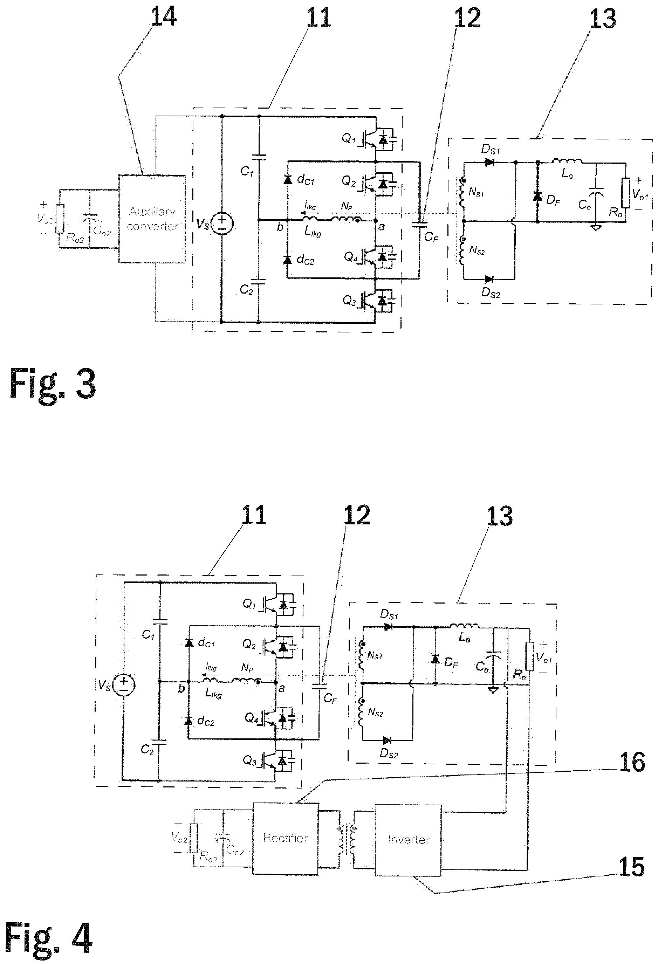

Figure 3 presents an alternative structure for a high input voltage three-level converter according to the prior art. The alternative structure for a high input voltage three-level converter according to the prior art has a flying capacitor C_{F} 12 between the primary side 11 and the secondary side 13. The high input voltage three-level converter according to the prior art has an NPC inverter and also an additional auxiliary converter 14 arranged at the input of the primary side 11.

The alternative structure for a high input voltage three-level converter according to the prior art as shown on Figure 3 may be suitable for regulation of the auxiliary output voltage Vₒ₂ of the primary side 11, and also when a wide regulation range in terms of load and input voltage variation is required. In the case of the additional auxiliary converter 14 directly fed from the input of the primary side 11 as shown on Figure 3, however, a burden of high voltage stress issues arises in high input voltage applications. This would end up a similar prior art high input voltage three-level converter structure, which is costly and complex for a small auxiliary power.

Figure 4 presents another alternative structure for a high input voltage three-level converter according to the prior art. Another alternative structure for a high input voltage three-level converter according to the prior art has a flying capacitor C_{F} 12 between the primary side 11 and the secondary side 13. The high input voltage three-level converter according to the prior art has an NPC inverter and also an additional isolated converter arranged at the output of secondary side 13, said additional isolated converter having a inverter 15 and an rectifier 16.

Another alternative structure for a high input voltage three-level converter according to the prior art as shown on Figure 4 may also be suitable for regulation of the auxiliary output voltage Vₒ₂, and also when a wide regulation range in terms of load and input voltage variation is required. In the case of the additional isolated converter fed from the output side, the voltage stress is relatively low and the regulated input voltage Vₒ₁ of the additional isolated converter may be fixed, which is beneficial to the converter design. However in this prior art high input voltage three-level converter structure, the main circuit should handle additional power for the auxiliary output, and an additional transformer also increases the cost and the complexity.

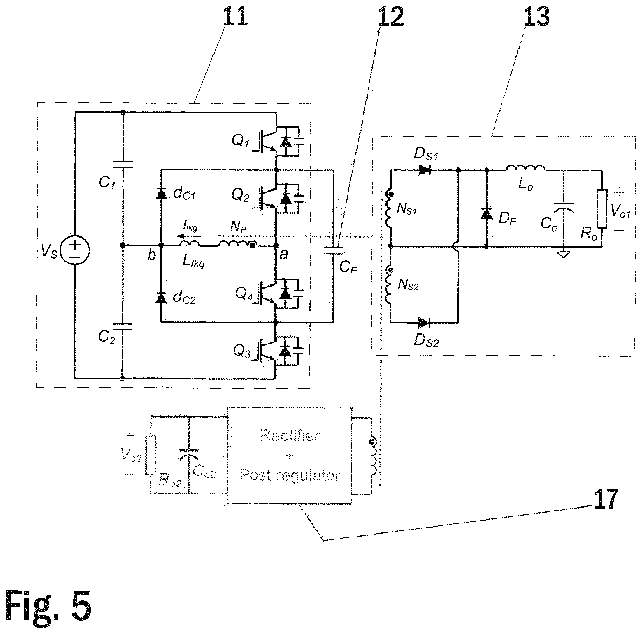

Figure 5 presents a third alternative structure for a high input voltage three-level converter according to the prior art. A third alternative structure for a high input voltage three-level converter according to the prior art has a flying capacitor C_{F} 12 between the primary side 11 and the secondary side 13. The high input voltage three-level converter according to the prior art has an NPC inverter and also an additional auxiliary transformer multi-winding based post-regulator 17 arranged in the connection of the transformer windings for the main circuit.

The prior art high input voltage three-level converter shown on Figure 5 has a relatively simple structure, therefore it is widely used [2]. However, in this high input voltage three-level converter the regulation range of the auxiliary output voltage Vₒ₂ is highly affected by the main circuit operation, since the same voltage shape is applied to both of the transformer windings for the main circuit and the additional auxiliary transformer multi-winding based post-regulator 17.

In the case of the additional DC-DC converters, even with the wide regulation range of the auxiliary output voltage Vₒ₂, their cost and complexity is too high. In the case of the additional post-regulator fed by an additional transformer winding the regulation range of Vₒ₂ is highly affected by the main circuit operation. As a conclusion, it is difficult to achieve both simple structure and wide regulation range at the same time regarding the primary side auxiliary output for high input voltage applications.

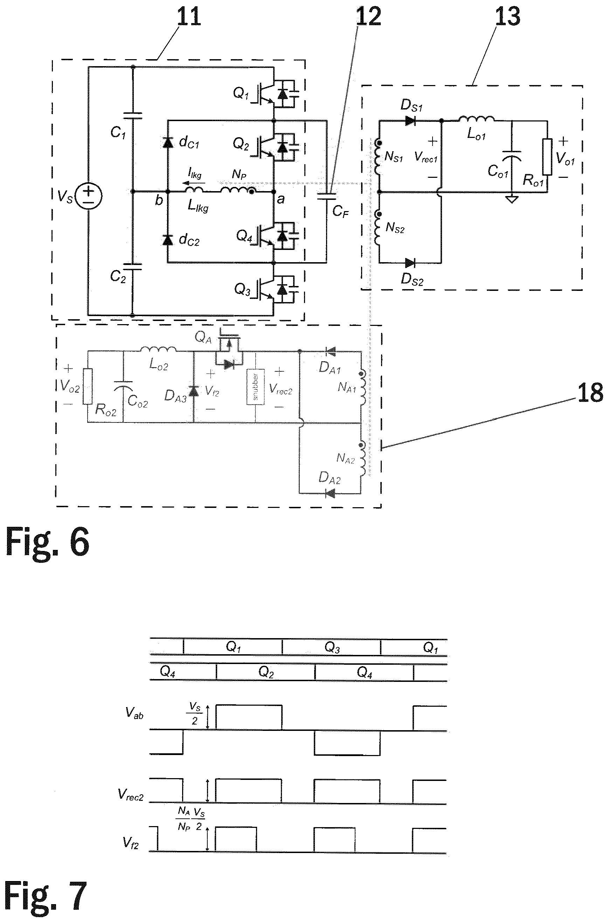

Figure 6 presents a fourth alternative structure for a high input voltage three-level converter according to the prior art. The presented fourth alternative structure for a high input voltage three-level converter according to the prior art is one more specified example of the third alternative high input voltage three-level converter presented in Figure 5. A fourth alternative structure for a high input voltage three-level converter according to the prior art has a flying capacitor C_{F} 12 between the primary side 11 and the secondary side 13. The high input voltage three-level converter according to the prior art has an NPC inverter and also an additional auxiliary transformer multi-winding based post-regulator 18 arranged in the connection of the transformer windings for the main circuit.

Figure 7 presents key waveforms of a fourth alternative structure for a high input voltage three-level converter according to the prior art. As shown on Figure 7, the post-regulator 18 regulates the auxiliary output voltage Vₒ₂ by controlling the voltage applied to the LC filter, V_{f2}, from the rectified voltage V_{rec2}. For the proper operation, therefore, the gate signal of the additional auxiliary transformer multi-winding based post-regulator 18 should be synchronized with that of the main circuit. In addition, the prior art high input voltage three-level converter requires a voltage snubber for limiting the voltage stress on the switch Q_{A} of the post-regulator.

The design specification and simulation parameters for the prior art high input voltage three-level converter shown on Figure 7 are as follows:
- Input: Vs = 600 V,
- Main output: Vₒ₁ = 48 V, 460 W,
- Auxiliary output: Vₒ₂ = 24 V, 120 W,
- Switching frequency of three-level converter: 30 kHz,
- Switching frequency of post-regulator: 60 kHz, and
- Transformer turn ratio: N_{P} : N_{A} : Ns = 5:3:1.

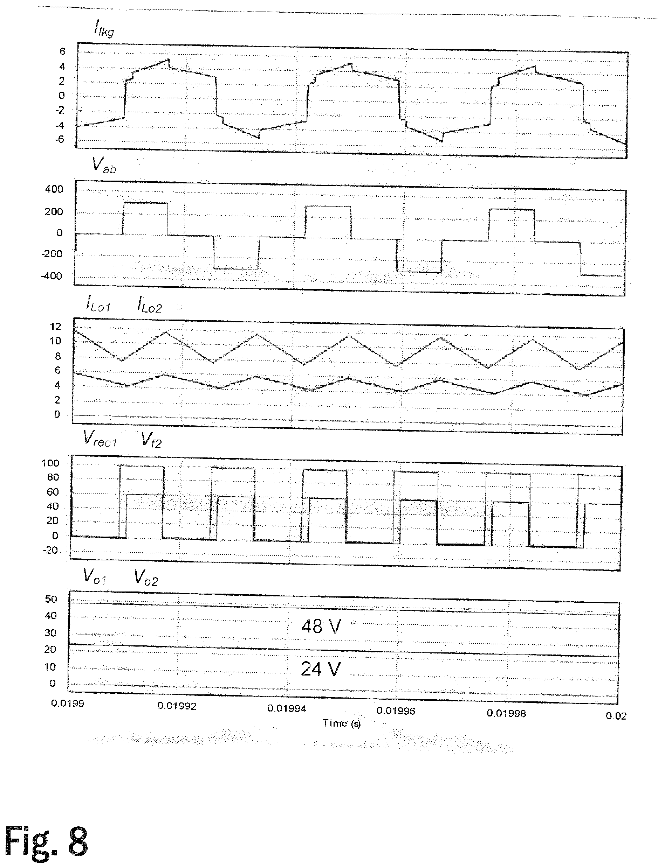

Figure 8 presents the first simulation waveforms of a fourth alternative structure for a high input voltage three-level converter according to the prior art. The first simulation of the prior art high input voltage three-level converter as shown on Figure 8 is carried out with a standard main load of 460 W and a standard auxiliary load of 120 W.

As can be seen from the first simulation waveforms of the prior art high input voltage three-level converter structure shown on Figure 8, the auxiliary output voltage Vₒ₂ is regulated well when the main circuit operates in continuous conduction mode (CCM, Continuous Conduction Mode).

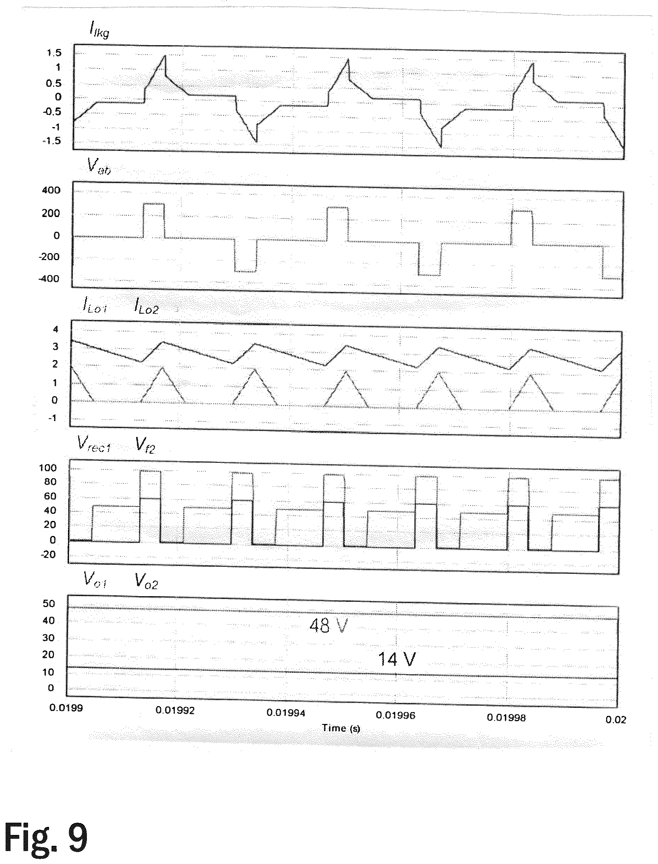

Figure 9 presents the second simulation waveforms of a fourth alternative structure for a high input voltage three-level converter according to the prior art. The second simulation of the prior art high input voltage three-level converter as shown on Figure 9 is carried out with a decreased main load of 23 W and a decreased auxiliary load of 40 W.

It can be seen from the second simulation waveforms of the prior art high input voltage three-level converter structure shown on Figure 9, that as the load condition of the main circuit decreases the main circuit operates in discontinuous conduction mode and the duty-ratio reduces (DCM, Discontinuous Conduction Mode).

Since the maximum duty-cycle of the additional auxiliary transformer multi-winding based post-regulator according to prior art is limited by the duty-cycle of the main circuit, it cannot operate with a proper duty-cycle required for the regulation of the auxiliary output voltage Vₒ₂. As a result, the auxiliary output voltage Vₒ₂ drops. This is the main drawback of the conventional prior art high input voltage three-level converter structure.

A three-level converter structure, which utilizes an NPC inverter with a flying capacitor at the same time, is a very promising topology for high input voltage applications. As for a multi-output structure, a conventional post-regulator fed from a transformer multi-winding is a simple approach. However, its regulation range is affected by the load condition of the main output.

The problem therefore is to find a simple and straight-forward three-level converter structure for high input voltage applications that can produce a good quality auxiliary power output.

There is a demand in the market for an inexpensive three-level converter for high input voltage applications which would produce a good quality auxiliary power output.

### BRIEF DESCRIPTION OF THE INVENTION

An object of the present invention is thus to provide an apparatus for overcoming the above problems and to alleviate the above disadvantages.

The objects of the invention are achieved by a DC/DC converter having a primary side comprising: a first capacitor and a second capacitor connected to a supply voltage and having a midpoint between said first capacitor and said second capacitor, and a three-level Neutral Point Clamped inverter having at least four switches, arranged as a first switch pair and a second switch pair with outer switches of said first and second switch pair connected said supply voltage and the inner switches of said first and second switch pair connected to a neutral reference point between said inner switches, and a first diode connected between said midpoint and a common point between the switches of said first switch pair, and a second diode connected between said midpoint and a common point between the switches of said second switch pair; and a secondary side comprising: a first secondary diode and a second secondary diode, an output impedance and an output capacitance, wherein the cathodes of said first secondary diode and said second secondary diode are connected to a positive terminal of a secondary side voltage output through said output impedance; and wherein said DC/DC converter comprises: at least one flying capacitor, said at least one flying capacitor comprising a first flying capacitor connected to a common point between the switches of said first switch pair, and a second flying capacitor connected to a common point between the switches of said second switch pair, said first and second flying capacitor having a flying capacitor midpoint between said first flying capacitor and said second flying capacitor; a first transformer, having a primary winding between said midpoint of said first and second capacitors and said neutral reference point between said inner switches, and secondary windings connected to anodes of said first secondary diode and said second secondary diode, said secondary windings having a secondary winding midpoint between said secondary windings connected to a negative terminal of said secondary side voltage output and said secondary winding midpoint connected to said positive terminal of said secondary side voltage output through said output capacitance; and an auxiliary DC/DC converter comprising a first auxiliary diode and a second auxiliary diode, an auxiliary output impedance and an auxiliary output capacitance, said auxiliary DC/DC converter being connected to said at least one flying capacitor, so that said at least one flying capacitor is used as an energy source for feeding said auxiliary DC/DC converter, wherein the cathodes of said first auxiliary diode and said second auxiliary diode are connected to a positive terminal of an auxiliary voltage output through said auxiliary output impedance, said auxiliary DC/DC converter being supplied from a second transformer that is magnetically decoupled from said first transformer, an auxiliary primary winding of said second transformer being connected between said flying capacitor midpoint and said neutral reference point, and said auxiliary DC/DC converter being connected through a rectifier to auxiliary secondary windings of said second transformer, said auxiliary secondary windings being connected to anodes of said first auxiliary diode and said second auxiliary diode, said auxiliary secondary windings having an auxiliary secondary winding midpoint between said auxiliary secondary windings connected to a negative terminal of said auxiliary voltage output and said auxiliary secondary winding midpoint

Preferably, said auxiliary DC/DC converter comprises a post-regulator. Preferably, said auxiliary DC/DC converter comprises a buck converter.

### BRIEF DESCRIPTION OF THE DRAWINGS

Figure 1 shows a high input voltage three-level converter according to the prior art;
Figure 2 shows key waveforms of a high input voltage three-level converter according to the prior art;
Figure 3 shows an alternative structure for a high input voltage three-level converter according to the prior art;
Figure 4 shows another alternative structure for a high input voltage three-level converter according to the prior art;
Figure 5 shows a third alternative high input voltage three-level converter according to the prior art;
Figure 6 presents a fourth alternative high input voltage three-level converter according to the prior art;
Figure 7 shows key waveforms of a fourth alternative high input voltage three-level converter according to the prior art;
Figure 8 shows the first simulation waveforms of a fourth alternative high input voltage three-level converter according to the prior art;
Figure 9 shows the second simulation waveforms of a fourth alternative high input voltage three-level converter according to the prior art;

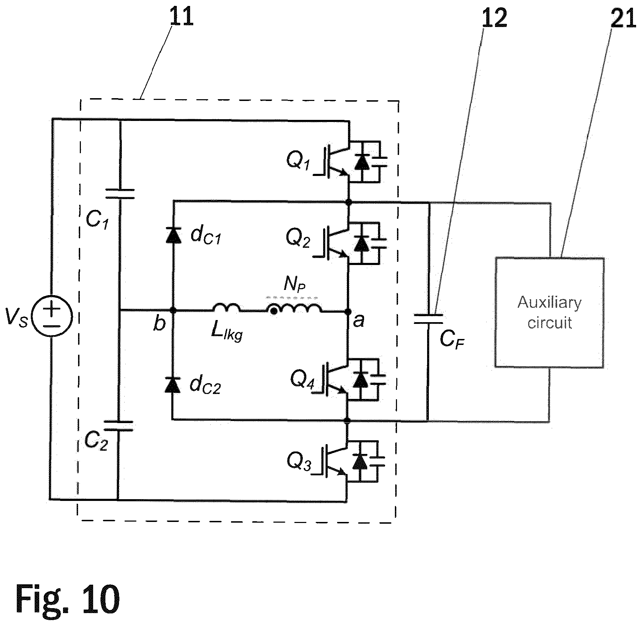

Figure 10 shows a primary side of one example of a high input voltage three-level converter helpful for understanding the present invention;

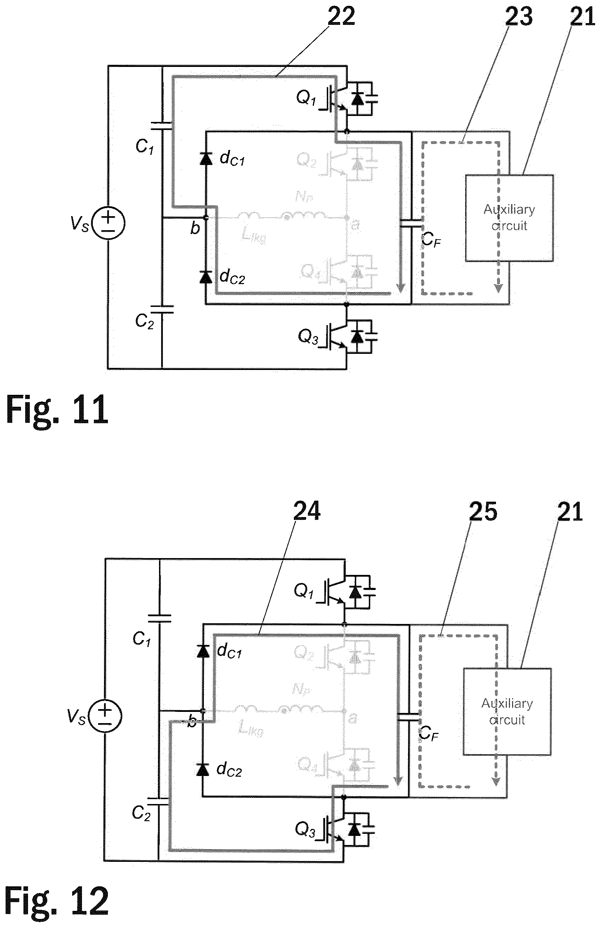

Figure 11 shows one example helpful for understanding the present invention of a power transferring path from the high input voltage three-level converter to the flying capacitor for feeding of the auxiliary circuit during switch Q₁ conducting state;
Figure 12 shows one example helpful for understanding the present invention of a power transferring path from the high input voltage three-level converter to the flying capacitor for feeding of the auxiliary circuit during switch Q₃ conducting state;

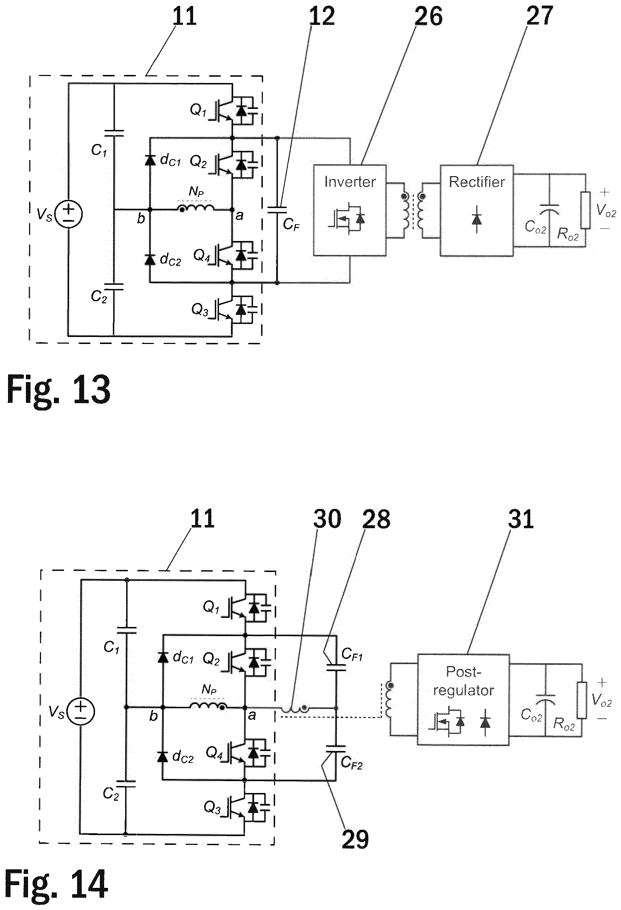

Figure 13 shows an example of a primary side of another alternative structure for a high input voltage three-level converter helpful for understanding the present invention;
Figure 14 shows an example of a primary side of a third alternative structure for a high input voltage three-level converter helpful for understanding the present invention;

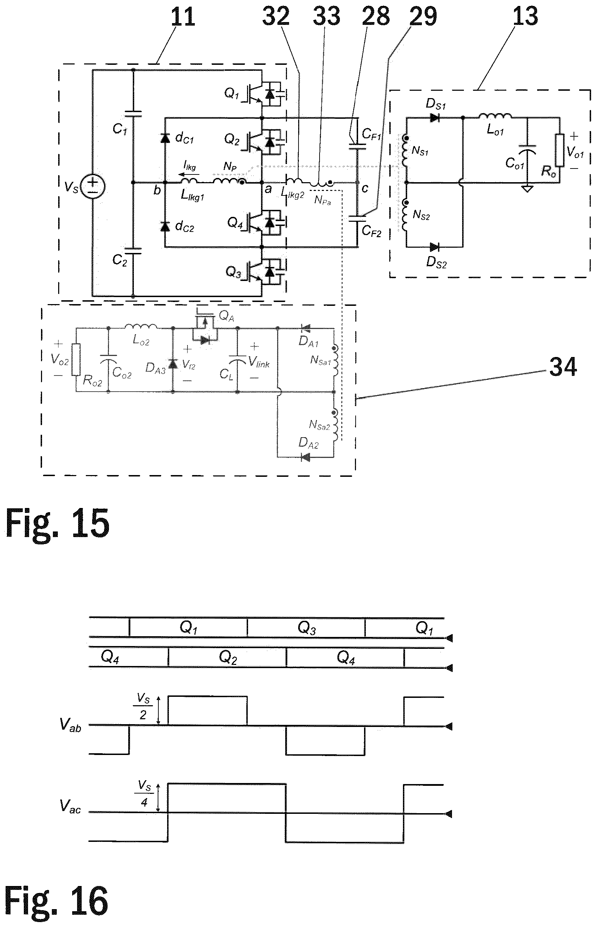

Figure 15 shows a primary side of a fourth alternative structure for a high input voltage three-level converter according to the present invention;
Figure 16 shows examples of key waveforms of a fourth alternative high input voltage three-level converter helpful for understanding the present invention;

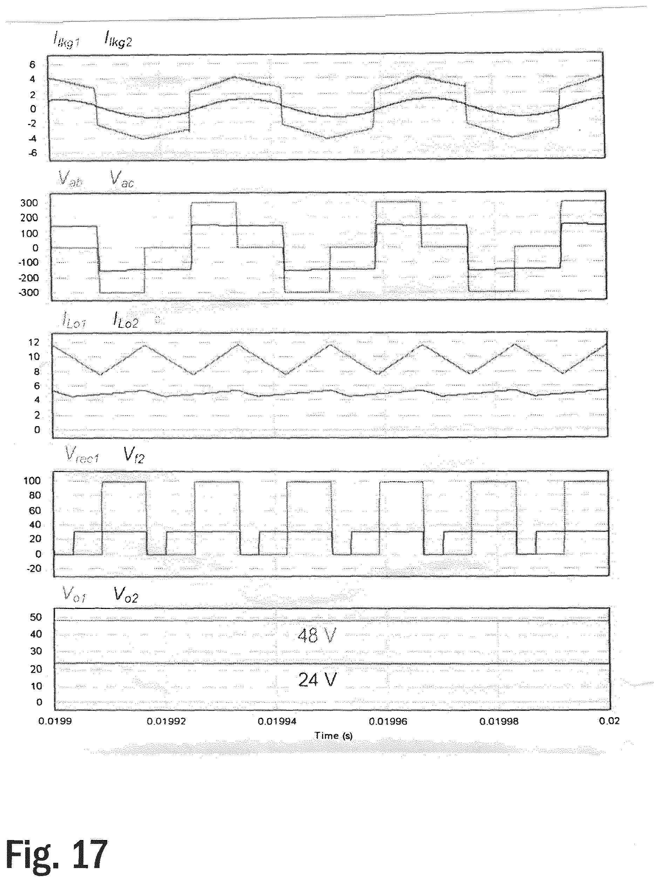

Figure 17 shows examples of the first simulation waveforms of a fourth alternative high input voltage three-level converter helpful for understanding the present invention; and

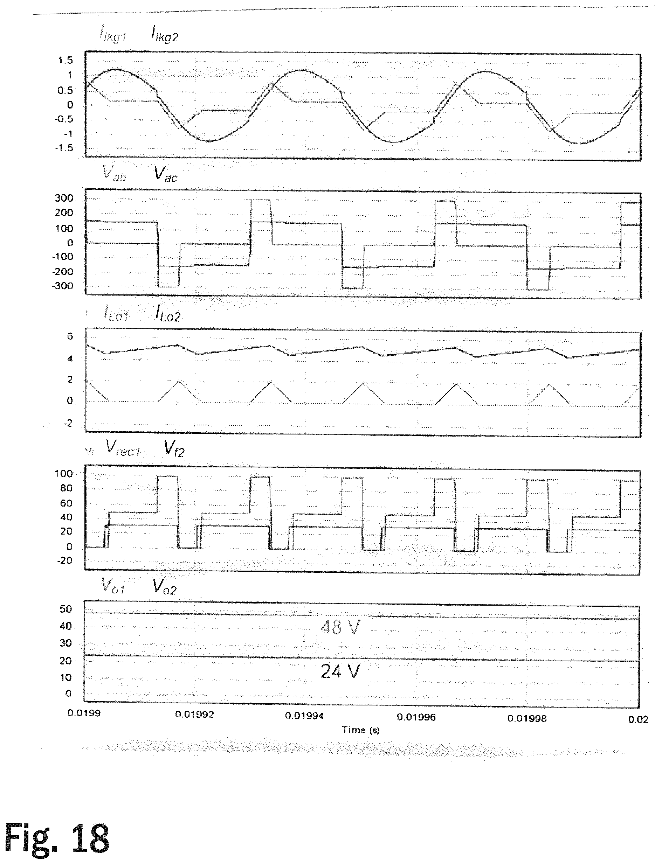

Figure 18 shows examples of the second simulation waveforms of a fourth alternative high input voltage three-level converter helpful for understanding the present invention.

The prior art drawings of Figures 1 to 9 have been presented earlier. In the following, the invention will be described in greater detail by means of preferred embodiments and helpful examples with reference to the accompanying drawings of Figures 10 to 18.

### DETAILED DESCRIPTION OF THE INVENTION

The present invention relates to a three-level converter for high input voltage applications. The three-level converter structure according to the present invention has a Neutral Point Clamped inverter and a flying capacitor. One of the output structures of the three-level converter according to the present invention may be a conventional post-regulator.

Furthermore, the three-level converter structure according to the present invention utilizes the flying capacitor as an energy source. This structure guarantees to the three-level converter structure according to the present invention a wide regulation range with a simple structure.

Figure 10 presents a primary side of one example of a high input voltage three-level converter helpful for understanding the present invention. The high input voltage three-level converter has a flying capacitor C_{F} 12 between the primary side 11 and the secondary side (not shown). The high input voltage three-level converter utilizes an NPC inverter (NPC, Neutral Point Clamped) having switches Q₁ to Q₄, said NPC inverter having a neutral reference point a between the switches Q₂ and Q₄.

Furthermore, the three-level converter has an auxiliary circuit 21, e.g. an auxiliary converter 21, connected to the flying capacitor C_{F} 12. The three-level converter structure utilizes the flying capacitor C_{F} 12 of the three-level converter as an energy source to feed the auxiliary circuit 21. Since the voltage V_{Cf} of the flying capacitor C_{F} 12 is the half of the input voltage Vs, the auxiliary circuit only needs to handle the voltage of Vs/2.

Figure 11 presents one example helpful for understanding the present invention of a power transferring path from the high input voltage three-level converter to the flying capacitor for feeding of the auxiliary circuit during switch Q₁ conducting state. In Figure 11 the power transferring path from the converter to the flying capacitor is marked with a reference number 22. Respectively the power transferring path from the flying capacitor for feeding of the auxiliary circuit 21 is marked with a reference number 23.

Figure 12 presents one example helpful for understanding the present invention of a power transferring path from the high input voltage three-level converter to the flying capacitor for feeding of the auxiliary circuit during switch Q₃ conducting state. In Figure 12 the power transferring path from the converter to the flying capacitor is marked with a reference number 24. Respectively the power transferring path from the flying capacitor for feeding of the auxiliary circuit 21 is marked with a reference number 25.

In a high input voltage three-level converter, the energy to feed the auxiliary circuit 21 is transferred to the flying capacitor C_{F} 12 whenever switch Q1 or switch Q3 is in conducting state. Since in a high input voltage three-level converter switch Q1 or switch Q3 always conducts with the phase-shift modulation, regardless of the phase-shift angle, the operation of the auxiliary circuit 21 is not affected by the operation of the main circuit. Therefore, a wide regulation range of the auxiliary output voltage Vₒ₂ can be achieved.

Figure 13 presents an example of a primary side of another alternative structure for a high input voltage three-level converter helpful for understanding the present invention. As the potential of the auxiliary output voltage Vₒ₂ is usually different from that of C_{F}, an isolated dc-dc converter is required. Another alternative structure for a high input voltage three-level converter has a flying capacitor C_{F} 12 between the primary side 11 and the secondary side (not shown). The high input voltage three-level converter utilizes an NPC inverter having switches Q₁ to Q₄, said NPC inverter having a neutral reference point a between the switches Q₂ and Q₄. Furthermore, the high input voltage three-level converter has also an isolated auxiliary converter connected to the flying capacitor C_{F} 12, said auxiliary isolated converter having an inverter 26 and a rectifier 27.

The presented another alternative structure for a high input voltage three-level converter only requires a functional isolation, which may require smaller insulation voltage. The presented another alternative structure of Figure 13 provides an isolated converter structure as an auxiliary circuit, where the control switch is / switches are located on the primary side of the auxiliary circuit.

Figure 14 presents an example of a primary side of a third alternative structure for a high input voltage three-level converter helpful for understanding the present invention. A third alternative structure for a high input voltage three-level converter has a first flying capacitor C_{F1} 28 and a second first flying capacitor C_{F2} 29 between the primary side 11 and the secondary side (not shown). The high input voltage three-level converter utilizes an NPC inverter having switches Q₁ to Q₄, said NPC inverter having a neutral reference point a between the switches Q₂ and Q₄. Furthermore, the third alternative structure for a high input voltage three-level converter has also at least one inductor winding 30 arranged between the said neutral reference point a and a flying capacitor midpoint between the first flying capacitor C_{F1} 28 and the second first flying capacitor C_{F2} 29. The high input voltage three-level converter has also an additional combination of an auxiliary isolated converter, e.g. an auxiliary non-regulated isolated converter, in the connection of the said at least one inductor winding 30 between the said neutral reference point a and the said flying capacitor midpoint. The auxiliary isolated converter may be further connected to a post-regulator 31.

The presented third alternative structure for a high input voltage three-level converter also only requires a functional isolation, which may require smaller insulation voltage. The presented third alternative structure of Figure 14 provides a combination of a non-regulated isolated converter further connected to a post-regulator 31, where the control switch is / switches are located on the secondary side of the auxiliary circuit. The inner switches of the three-level converter can be shared with the non-regulated isolated converter with the split flying capacitor, resulting in a simple isolation.

Figure 15 presents a primary side of a fourth alternative structure for a high input voltage three-level converter according to the present invention. The presented fourth alternative structure for a high input voltage three-level converter according to the present invention is one more specified example of the third alternative high input voltage three-level converter presented in Figure 14. A fourth alternative structure for a high input voltage three-level converter according to the present invention has a first flying capacitor C_{F1} 28 and a second first flying capacitor C_{F2} 29 between the primary side 11 and the secondary side 13. The high input voltage three-level converter according to the present invention utilizes an NPC inverter having switches Q₁ to Q₄, said NPC inverter having a neutral reference point a between the switches Q₂ and Q₄. Furthermore, the fourth alternative structure for a high input voltage three-level converter according to the present invention has also at least one inductor winding 32, 33 arranged between the said neutral reference point a and a flying capacitor midpoint c between the first flying capacitor C_{F1} 28 and the second first flying capacitor C_{F2} 29. The high input voltage three-level converter according to the present invention has also an additional combination 34 of an auxiliary isolated converter, e.g. an auxiliary non-regulated isolated converter, arranged in the connection of the said at least one inductor winding 32, 33 between the said neutral reference point a and the said flying capacitor midpoint c. The auxiliary isolated converter may be further connected to a post-regulator.

As shown on Figure 15, the presented fourth alternative structure for a high input voltage three-level converter according to the present invention has a resonant converter, which is used as an isolated converter and operated by the inner switches Q₂ and Q₄ of the three-level converter, resulting in a simple galvanic isolation. The fixed frequency resonant converter of the presented fourth alternative structure for a high input voltage three-level converter according to the present invention may also be further connected to a buck converter as a post-regulator, as shown on Figure 15.

Figure 16 presents examples of key waveforms of a fourth alternative high input voltage three-level converter helpful for understanding the present invention. As shown on Figure 16, since the gate signals of the inner switches Q₂ and Q₄ are symmetrical with a fixed Fs, the square voltage waveform is applied between the neutral reference point a between the switches Q₂ and Q₄ and a flying capacitor midpoint c between the first flying capacitor C_{F1} 28 and the second first flying capacitor C_{F2} 29. The voltage across the first flying capacitor C_{F1} 28 and the second first flying capacitor C_{F2} 29 is Vs/4; therefore Vs/4 is applied to the voltage V_{ac} across the neutral reference point a between the switches Q₂ and Q₄ and the flying capacitor midpoint c. Since this isolated resonant converter of the three-level converter operates at fixed Fs, the link voltage, Vₗᵢₙₖ, varies according to load and input conditions. Therefore, the following buck converter regulates the auxiliary output voltage Vₒ₂ as a post-regulator. The operation of this post-regulator of the presented three-level converter is not affected by the main circuit. Therefore the design the three-level converter can more easily be optimized when compared to the prior art solutions.

The design specification and simulation parameters for the prior art high input voltage three-level converter shown on Figure 16 are as follows:
- Input: Vs = 600 V,
- Main output: Vₒ₁ = 48 V, 460 W,
- Auxiliary output: Vₒ₂ = 24 V, 120 W,
- Switching frequency of three-level converter: 30 kHz,
- Switching frequency of post-regulator: 60 kHz, and
- Transformer turn ratio: N_{P} : N_{A} : Ns = 5:3:1.

Figure 17 presents examples of the first simulation waveforms of a fourth alternative structure for a high input voltage three-level converter helpful for understanding the present invention. The first simulation of the high input voltage three-level converter as shown on Figure 17 is carried out with a standard main load of 460 W and a standard auxiliary load of 120 W.

As can be seen from the first simulation waveforms of the high input voltage three-level converter shown on Figure 17, the auxiliary output voltage Vₒ₂ is regulated well when the main circuit operates in continuous conduction mode (CCM, Continuous Conduction Mode).

Figure 18 presents examples of the second simulation waveforms of a fourth alternative structure for a high input voltage three-level converter helpful for understanding the present invention. The second simulation of the high input voltage three-level converter as shown on Figure 18 is carried out with a decreased main load of 23 W and a standard auxiliary load of 120 W.

It can be seen from the second simulation waveforms of the high input voltage three-level converter shown on Figure 18, that as the load condition of the main circuit decreases the main circuit operates in discontinuous conduction mode and the duty-ratio reduces (DCM, Discontinuous Conduction Mode).

Since the maximum duty-cycle of the additional auxiliary combination 34 of a non-regulated isolated converter further connected to a post-regulator according to present invention is not limited by the duty-cycle of the main circuit, the auxiliary output voltage Vₒ₂ remains at a proper level and does not drop.

Therefore, the additional auxiliary combination 34 of a non-regulated isolated converter further connected to a post-regulator according to present invention can operate with a proper duty-cycle required for the regulation of the auxiliary output voltage Vₒ₂.

The auxiliary output voltage Vₒ₂ of the high input voltage three-level converter according to the present invention is always regulated regardless of the load condition of the main circuit. Therefore, the high input voltage three-level converter according to the present invention is highly suitable for applications where a wide regulation range is required.

In the high input voltage three-level converter according to the present invention any suitable types of conventional DC-DC converters can be applied to the multi-output structure as an auxiliary circuit. Therefore, depending on specifications, a proper DC-DC converter topology may be selected.

The high input voltage three-level converter according to the present invention provides a simple implementation of the isolated converter by sharing the switches with the three-level converter. The operation of the auxiliary circuit is not affected by the operation of the main circuit. Therefore, a wide regulation range of auxiliary output voltage Vₒ₂ can be achieved in comparison with the prior art structures. Furthermore, since the operation of this post-regulator is not affected by the main circuit, a more optimized design of the post-regulator can be utilized compared with that of the prior art solutions.

With the help of the present invention a high input voltage three-level converter having a simple structure with a wide regulation range. The high input voltage three-level converter according to the present invention provides a multi-output structure for the three-level converter, which utilizes the flying capacitor as an energy source. The multi-output structure for the three-level converter according to the present invention provides a primary side auxiliary output for high input voltage applications.

With the help of the present invention auxiliary circuit only needs to handle the voltage of Vs/2, i.e. a half of the input voltage Vs. Therefore the present invention is suitable for high input voltage applications. Also a tight regulation of a primary side auxiliary output voltage Vₒ₂ is achieved, regardless of the main circuit operation.

The solution according to the present invention provides a simple and straight-forward three-level converter structure for high input voltage applications that can produce a good quality auxiliary power output.

It will be obvious to a person skilled in the art that, as the technology advances, the inventive concept can be implemented in various ways. The invention and its embodiments are not limited to the examples described above but may vary within the scope of the claims.

### REFERENCES

[1] L. Balogh, "Design Review: 140 W, Multiple output high density DC/DC converter," Unitrode Design Seminar, 1997.
[2] "Application note - Secondary side post regulator (SSPR) for switching power supplies with multiple outputs," ON Semiconductor, Apr. 2001.
[3] J. R. Pinheiro and I. Barbi, "The three-level ZVS-PWM DC-to-DC converter," IEEE Trans. Power Electronics, vol. 8, no. 4, pp. 486-492, Oct. 1993.
[4] US6349044 (B1), 19-Feb-2002, Zero voltage zero current three level dc-dc converter.
[5] CN1109399 (C), 21-May-2003, Three-level DC converter of zero-voltage switch with clamping diode.
[6] CN100405723 (C), 23-Jul-2008, PWM combined three level dc converter of zero voltage switch.
[7] E. Deschamps and I. Barbi, "A flying-capacitor ZVS PWM 1.5 kW DC-to-DC converter with half of the input voltage across the switches," IEEE Trans. Power Electronics, vol. 15, no. 5, pp. 855-860, Sep. 2000.
[8] CN101588126 (A), 25-Nov-2009, Wide load characteristic ZVZCS three-level DC-DC converter.
[9] S. J. Jeon et al., "A Primary-Side-Assisted Zero-Voltage and Zero-Current Switching Three-Level DC-DC Converter with Phase-Shift Control", APEC 2002; IEEE, ISBN 978-0-7803-7404-1; pages 641-647, Mar. 2002.
[10] US 2006/0050537 (A1), 09-Mar-2006, Input stage circuit of a three-level DC/DC converter.
[11] Chen Zhao et al., "The Analysis of the Charge Unbalance in Flying Capacitors of a Novel Three-level ZVS Converter", PEDS 2005, IEEE, ISBN 978-0-7803-9296-0; pages 882-885, Nov. 2005.

## Claims

1. A DC/DC converter having a primary side (11) comprising: a first capacitor (C₁) and a second capacitor (C₂) configured to be connected to a supply voltage (Vs) and having a midpoint **(b)** between said first capacitor (C₁) and said second capacitor (C₂), and a three-level Neutral Point Clamped inverter having at least four switches (Q₁ to Q₄), arranged as a first switch pair (Q₁, Q₂) and a second switch pair (Q₄, Q₃) with outer switches (Q₁ and Q₃) of said first and second switch pair configured to be connected to said supply voltage (Vs) and the inner switches (Q₂ and Q₄) of said first and second switch pair connected to a neutral reference point **(a)** between said inner switches (Q₂, Q₄), and a first diode (dci) connected between said midpoint **(b)** and a common point between the switches (Q₁, Q₂) of said first switch pair (Q₁, Q₂), and a second diode (d_{C2}) connected between said midpoint **(b)** and a common point between the switches (Q₄, Q₃) of said second switch pair (Q₄, Q₃); and a secondary side (13) comprising: a first secondary diode (Dsi) and a second secondary diode (D_{S2}), an output inductance (Lₒ₁) and an output capacitance (Cₒ₁), wherein the cathodes of said first secondary diode (Dsi) and said second secondary diode (D_{S2}) are connected to a positive terminal of a secondary side voltage output (Vₒ₁) through said output inductance (Lₒ₁); and wherein said DC/DC converter comprises:
- at least one flying capacitor (C_{F}, 28, 29), said at least one flying capacitor (C_{F}, 28, 29) comprising a first flying capacitor (C_{F1}, 28) connected to the common point between the switches (Q₁, Q₂) of said first switch pair (Q₁, Q₂), and a second flying capacitor (C_{F2}, 29) connected to the common point between the switches (Q₄, Q₃) of said second switch pair (Q₄, Q₃), said first and second flying capacitor having a flying capacitor midpoint **(c)** between said first flying capacitor (C_{F1}, 28) and said second flying capacitor (C_{F2}, 29);
- a first transformer (N_{P}, N_{S1}, N_{S2}), having a primary winding (N_{P}) connected between said midpoint **(b)** of said first and second capacitors (C₁, C₂) and said neutral reference point **(a)** between said inner switches (Q₂, Q₄), and secondary windings (Nsi, N_{S2}) connected to anodes of said first secondary diode (Dsi) and said second secondary diode (D_{S2}), said secondary windings (Nsi, N_{S2}) having a secondary winding midpoint between said secondary windings (Nsi, N_{S2}) connected to a negative terminal of said secondary side voltage output (Vₒ₁) and said secondary winding midpoint connected to said positive terminal of said secondary side voltage output (Vₒ₁) through said output capacitance (Cₒ₁); and
- an auxiliary combination (34) comprising an auxiliary DC/DC converter and connected so that said at least one flying capacitor is used as energy source for feeding said auxiliary DC/DC converter, said auxiliary DC/DC converter comprising an auxiliary output inductance (Lₒ₂) and an auxiliary output capacitance (Cₒ₂), said auxiliary DC/DC converter being supplied from a second transformer (N_{Pa}, 33, N_{Sa1}, N_{Sa2}) that comprises only three windings (N_{Pa}, N_{Sa1}, N_{Sa2}) and that is magnetically decoupled from said first transformer (N_{P}, Nsi, N_{S2}), an auxiliary primary winding (N_{Pa}, 33) of said second transformer (N_{Pa}, 33, N_{Sa1}, N_{Sa2}) being connected between said flying capacitor midpoint **(c)** and said neutral reference point **(a),** and said auxiliary DC/DC converter being connected through a first auxiliary diode (D_{A1}) and a second auxiliary diode (D_{A2}) to two auxiliary secondary windings (N_{Sa1}, N_{Sa2}) of said second transformer (N_{Pa}, 33, N_{Sa1}, N_{Sa2}), wherein the cathodes of said first auxiliary diode (D_{A1}) and second auxiliary diode (D_{A2}) are connected to a positive terminal of an auxiliary voltage output (Vₒ₂) through said auxiliary output inductance (Lₒ₂), said auxiliary secondary windings (N_{Sa1}, N_{Sa2}) being connected to anodes of said first auxiliary diode (D_{A1}) and said second auxiliary diode (D_{A2}), said auxiliary secondary windings (N_{Sa1}, N_{Sa2}) having an auxiliary secondary winding midpoint between said auxiliary secondary windings (N_{Sa1}, N_{Sa2}) connected to a negative terminal of said auxiliary voltage output (Vₒ₂) and said auxiliary secondary winding midpoint connected to said positive terminal of said auxiliary voltage output (Vₒ₂) through said auxiliary output capacitance (Cₒ₂).

2. A DC/DC converter according to claim 1, **characterized in that** said auxiliary combination (34) comprises a post-regulator.

3. A DC/DC converter according to claim 1, **characterized in that** said auxiliary combination (34) comprises a buck converter.

## Patentansprüche

1. Gleichstrom/Gleichstrom-Umrichter mit einer Primärseite (11), die Folgendes umfasst: einen ersten Kondensator (C₁) und einen zweiten Kondensator (C₂), die konfiguriert sind, mit einer Versorgungspannung (Vs) verbunden zu sein, und einen Mittelpunkt (b) zwischen dem ersten Kondensator (C₁) und dem zweiten Kondensator (C₂) aufweisen, und einen dreistufigen neutralpunktgeklemmten Wechselrichter mit mindestens vier Schaltern (Q₁ bis Q₄), die als ein erstes Schalterpaar (Q₁, Q₂) und ein zweites Schalterpaar (Q₄, Q₃) angeordnet sind, wobei die äußeren Schalter (Q₁ und Q₃) des ersten und des zweiten Schalterpaares konfiguriert sind, mit der Versorgungsspannung (Vs) verbunden zu sein, und die inneren Schalter (Q₂ und Q₄) des ersten und des zweiten Schalterpaares mit einem neutralen Referenzpunkt (a) zwischen den inneren Schaltern (Q₂, Q₄) verbunden sind, und eine erste Diode (d_{C1}), die zwischen dem Mittelpunkt (b) und einem gemeinsamen Punkt zwischen den Schaltern (Q₁, Q₂) des ersten Schalterpaares (Q₁, Q₂) verbunden ist, und eine zweite Diode (d_{C2}), die zwischen dem Mittelpunkt (b) und einem gemeinsamen Punkt zwischen den Schaltern (Q₄, Q₃) des zweiten Schalterpaares (Q₄, Q₃) verbunden ist; und einer Sekundärseite (13), die Folgendes umfasst: ein erste Sekundärdiode (D_{S1}) und eine zweite Sekundärdiode (D_{S2}), eine Ausgangsinduktivität (Lₒ₁) und eine Ausgangskapazität (Cₒ₁), wobei die Kathoden der ersten Sekundärdiode (D_{S1}) und der zweiten Sekundärdiode (D_{S2}) durch die Ausgangsinduktivität (Lₒ₁) mit einem positiven Anschluss eines sekundärseitigen Spannungsausgangs (Vₒ₁) verbunden sind; und
wobei der Gleichstrom/Gleichstrom-Umrichter Folgendes umfasst:
- mindestens einen massefreien Kondensator (C_{F}, 28, 29), wobei der mindestens eine massefreie Kondensator (C_{F}, 28, 29) einen ersten massefreien Kondensator (C_{F1}, 28), der mit dem gemeinsamen Punkt zwischen den Schaltern (Q₁, Q₂) des ersten Schalterpaares (Q₁, Q₂) verbunden ist, und einen zweiten massefreien Kondensator (C_{F2}, 29), der mit dem gemeinsamen Punkt zwischen den Schaltern (Q₄, Q₃) des zweiten Schalterpaares (Q₄, Q₃) verbunden ist, umfasst, wobei der erste und der zweite massefreie Kondensator einen Mittelpunkt (c) der massefreien Kondensatoren zwischen dem ersten massefreien Kondensator (C_{F1}, 28) und dem zweiten massefreien Kondensator (C_{F2}, 29) aufweisen;
- einen ersten Transformator (Np, N_{S1}, N_{S2}) mit einer Primärwicklung (N_{P}), die zwischen dem Mittelpunkt (b) des ersten und des zweiten Kondensators (C₁, C₂) und dem neutralen Referenzpunkt (a) zwischen den inneren Schaltern (Q₂, Q₄) verbunden ist, und Sekundärwicklungen (N_{S1}, N_{S2}), die mit den Anoden der ersten Sekundärdiode (D_{S1}) und der zweiten Sekundärdiode (D_{S2}) verbunden sind, wobei die Sekundärwicklungen (N_{S1}, N_{S2}) einen Sekundärwicklungsmittelpunkt zwischen den Sekundärwicklungen (N_{S1}, N_{S2}) aufweisen, der mit einem negativen Anschluss des sekundärseitigen Spannungsausgangs (Vₒ₁) verbunden ist, und der Sekundärwicklungsmittelpunkt durch die Ausgangskapazität (Cₒ₁) mit dem positiven Anschluss des sekundärseitigen Spannungsausgangs (Vₒ₁) verbunden ist; und
- eine Hilfskombination (34), die einen Hilfs-Gleichstrom/Gleichstrom-Umrichter umfasst und derart verbunden ist, dass der mindestens eine massefreie Kondensator als Energiequelle zum Speisen des Hilfs-Gleichstrom/Gleichstrom-Umrichters verwendet wird, wobei der Hilfs-Gleichstrom/Gleichstrom-Umrichter eine Hilfsausgangsinduktivität (Lₒ₂) und eine Hilfsausgangskapazität (Cₒ₂) umfasst, wobei der Hilfs-Gleichstrom/Gleichstrom-Umrichter von einem zweiten Transformator (N_{Pa}, 33, N_{Sa1}, N_{Sa2}) versorgt wird, der lediglich drei Wicklungen (N_{Pa}, N_{Sa1}, N_{Sa2}) umfasst und der vom ersten Transformator (N_{P}, N_{S1}, N_{S2}) magnetisch entkoppelt ist, wobei eine Hilfsprimärwicklung (N_{Pa}, 33) des zweiten Transformators (N_{Pa}, 33, N_{Sa1}, N_{Sa2}) zwischen dem Mittelpunkt (c) der massefreien Kondensatoren und dem neutralen Referenzpunkt (a) verbunden ist und der Hilfs-Gleichstrom/Gleichstrom-Umrichter durch eine erste Hilfsdiode (D_{A1}) und eine zweite Hilfsdiode (D_{A2}) mit zwei Hilfssekundärwicklungen (N_{Sa1}, N_{Sa2}) des zweiten Transformators (N_{Pa}, 33, N_{Sa1}, N_{Sa2}) verbunden ist, wobei die Kathoden der ersten Hilfsdiode (D_{A1}) und der zweiten Hilfsdiode (D_{A2}) durch die Hilfsausgangsinduktivität (Lₒ₂) mit einem positiven Anschluss eines Hilfsspannungsausgangs (Vₒ₂) verbunden sind,
wobei die Hilfssekundärwicklungen (N_{Sa1}, N_{Sa2}) mit den Anoden der ersten Hilfsdiode (D_{A1}) und der zweiten Hilfsdiode (D_{A2}) verbunden sind, die Hilfssekundärwicklungen (N_{Sa1}, N_{Sa2}) einen Hilfssekundärwicklungs-Mittelpunkt zwischen den Hilfssekundärwicklungen (N_{Sa1}, N_{Sa2}) aufweisen, der mit einem negativen Anschluss des Hilfsspannungsausgangs (Vₒ₂) verbunden ist, und der Hilfssekundärwicklungs-Mittelpunkt durch die Hilfsausgangskapazität (Cₒ₂) mit dem positiven Anschluss des Hilfsspannungsausgangs (Vₒ₂) verbunden ist.

2. Gleichstrom/Gleichstrom-Umrichter nach Anspruch 1, **dadurch gekennzeichnet, dass** die Hilfskombination (34) einen Nachregulator umfasst.

3. Gleichstrom/Gleichstrom-Umrichter nach Anspruch 1, **dadurch gekennzeichnet, dass** die Hilfskombination (34) einen Tiefsetzsteller-Umrichter umfasst.

## Revendications

1. Convertisseur DC/DC ayant un côté primaire (11) comprenant :
un premier condensateur (C₁) et un second condensateur (C₂) configuré pour être connecté à une tension d'alimentation (V_{S}) et ayant un point médian (b) entre ledit premier condensateur (C₁) et ledit second condensateur (C₂), et un onduleur verrouillé au point neutre à trois niveaux ayant au moins quatre commutateurs (Q₁ à Q₄), disposés sous la forme d'une première paire de commutateurs (Q₁, Q₂) et d'une seconde paire de commutateurs (Q₄, Q₃), les commutateurs extérieurs (Q₁ et Q₃) desdites première et seconde paires de commutateurs étant configurés pour être connectés à ladite tension d'alimentation (V_{S}) et les commutateurs intérieurs (Q₂ et Q₄) desdites première et
seconde paires de commutateurs étant connectés à un point de référence neutre (a) entre lesdits commutateurs intérieurs (Q₂, Q₄), et une première diode (d_{C1}) connectée entre ledit point médian (b) et un point commun entre les commutateurs (Q₁, Q₂) de ladite première paire de commutateurs (Q₁, Q₂), et une seconde diode (d_{C2}) connectée entre ledit point médian (b) et un point commun entre les commutateurs (Q₄, Q₃) de ladite seconde paire de commutateurs (Q₄, Q₃) ; et un côté secondaire (13) comprenant une première diode secondaire (D_{S1}) et une seconde diode secondaire (D_{S2}),
une inductance de sortie (Lₒ₁) et une capacité de sortie (Cₒ₁), où les cathodes de ladite première diode secondaire (D_{S1}) et de ladite seconde diode secondaire (D_{S2}) sont connectées à une borne positive d'une sortie de tension du côté secondaire (Vₒ₁) par l'intermédiaire de ladite inductance de sortie (Lₒ₁) ; et
où ledit convertisseur DC/DC comprend :
- au moins un condensateur volant (C_{F}, 28, 29), ledit au moins un condensateur volant (C_{F}, 28, 29) comprenant un premier condensateur volant (C_{F1}, 28) connecté au point commun entre les commutateurs (Q₁, Q₂) de ladite première paire de commutateurs (Q₁, Q₂), et un second condensateur volant (C_{F2}, 29) connecté au point commun entre les commutateurs (Q₄, Q₃) de ladite seconde paire de commutateurs (Q₄, Q₃), lesdits premier et second condensateurs volants ayant un point médian de condensateur volant (c) entre ledit premier condensateur volant (C_{F1}, 28) et ledit second condensateur volant (C_{F2}, 29) ;
- un premier transformateur (N_{P}, N_{S1}, N_{S2}), ayant un enroulement primaire (N_{P}) connecté entre ledit point médian (b) desdits premier et second condensateurs (C₁, C₂) et ledit point de référence neutre (a) entre lesdits commutateurs intérieurs (Q₂, Q₄), et des enroulements secondaires (N_{S1}, N_{S2}) connectés aux anodes de ladite première diode secondaire (D_{S1}) et de ladite seconde diode secondaire (D_{S2}), lesdits enroulements secondaires (N_{S1}, N_{S2}) ayant un point médian d'enroulement secondaire entre lesdits enroulements secondaires (N_{S1}, N_{S2}) connecté à une borne négative de ladite sortie de tension du côté secondaire (Vₒ₁) et ledit point médian d'enroulement secondaire connecté à une borne négative de ladite sortie de tension du côté secondaire (Vₒ₁) par l'intermédiaire de ladite capacité de sortie (Cₒ₁) ; et
- une combinaison auxiliaire (34) comprenant un convertisseur DC/DC auxiliaire et connectée de sorte que ledit au moins un condensateur volant est utilisé comme source d'énergie pour alimenter ledit convertisseur DC/DC auxiliaire, ledit convertisseur DC/DC auxiliaire comprenant une inductance de sortie auxiliaire (Lₒ₂) et une capacité de sortie auxiliaire (Cₒ₂), ledit convertisseur DC/DC auxiliaire étant alimenté par un second transformateur (N_{Pa}, 33, N_{Sa1},
N_{Sa2}) qui comprend seulement trois enroulements (N_{Pa}, N_{Sa1}, N_{Sa2}) et qui est magnétiquement découplé dudit premier transformateur (N_{P}, N_{S1}, N_{S2}), un enroulement primaire auxiliaire (N_{Pa}, 33) dudit second transformateur (N_{Pa}, 33, N_{Sa1}, N_{Sa2}) étant connecté entre ledit point médian du condensateur volant (c) et ledit point de référence neutre (a), et ledit convertisseur DC/DC auxiliaire étant connecté par l'intermédiaire d'une première diode auxiliaire (D_{A1}) et d'une seconde diode auxiliaire (D_{A2}) à deux enroulements secondaires auxiliaires (N_{Sa1}, N_{Sa2}) dudit second transformateur (N_{Pa}, 33, N_{Sa1}, N_{Sa2}), où les cathodes de ladite première diode auxiliaire (D_{A1}) et de ladite seconde diode auxiliaire (D_{A2}) sont connectées à une borne positive d'une sortie de tension auxiliaire (Vₒ₂) par l'intermédiaire de ladite inductance de sortie auxiliaire (Lₒ₂),
lesdits enroulements secondaires auxiliaires (N_{Sa1}, N_{Sa2}) étant connectés aux anodes de ladite première diode auxiliaire (D_{A1}) et de ladite seconde diode auxiliaire (D_{A2}), lesdits enroulements secondaires auxiliaires (N_{Sa1}, N_{Sa2}) ayant un point médian d'enroulement secondaire auxiliaire entre lesdits enroulements secondaires auxiliaires (N_{Sa1}, N_{Sa2}) connectés à une borne négative de ladite sortie de tension auxiliaire (Vₒ₂) et audit point médian d'enroulement secondaire auxiliaire connecté à ladite borne positive de ladite sortie de tension auxiliaire (Vₒ₂) à travers ladite capacité de sortie auxiliaire (Cₒ₂).

2. Convertisseur DC/DC selon la revendication 1, **caractérisé en ce que** ladite combinaison auxiliaire (34) comprend un post-régulateur.

3. Convertisseur DC/DC selon la revendication 1, **caractérisé en ce que** ladite combinaison auxiliaire (34) comprend un convertisseur abaisseur.
